# EUROPEAN PATENT SPECIFICATION

(11) **EP 0 453 900 B1**
(45) Date of publication and mention of the grant of the patent: **29.06.1994**
(21) Application number: 91105831.1
(22) Date of filing: 12.04.1991
(51) Int. Cl.: B60T 8/42

(54) **Braking circuit provided with antilocking apparatus**
Bremskreis mit Blockierverhinderer
Circuit de freinage avec dispositif anti-blocage

(30) Priority: 25.04.1990 JP 111075/90
(43) Date of publication of application: 30.10.1991
(73) Proprietor: SUMITOMO ELECTRIC INDUSTRIES, LTD., Osaka-shi, Osaka 541 (JP)
(72) Inventor: Yamada, Shinji, c/o Itami Works, Itami-shi, Hyogo (JP)
(74) Representative: Lehn, Werner, Dipl.-Ing.

(56) References cited:
- EP-A- 0 202 845
- EP-A- 0 283 332
- EP-A- 0 361 502
- DE-A- 2 703 761
- DE-A- 3 844 126

## Description

### BACKGROUND OF THE INVENTION

The present invention generally relates to a braking circuit provided with an antilocking apparatus, and more particularly, prevents the pumping pulsation from transferring onto the master cylinder side at the above described pumping operation time in a reflux system of antilocking apparatus of discharging the operating liquid into the reflux passage from the wheel brake at the antilocking time so as to reflux it onto the master cylinder side by a pump provided on the reflux passage.

Conventionally, this type of reflux system of antilocking apparatus adopts a system of having
a) a reflux passage which is branched from a main flow passage for connecting a master cylinder with a wheel brake so as to return the operating liquid to a return point lying on the main flow passage on the upper stream side (namely, the master cylinder side) above the branch point,
b) a pump which is provided on the above described reflux passage so as to flow back the operating liquid,
c) a pressure governing means which is adapted to reduce the braking pressure of the wheel brake by the discharging of the operating liquid from the above described branch point into the reflux passage or to feed the operating liquid into the wheel brake by way of the above described branch point from the main flow passage of the downstream under the above described reflux point so as to increase the braking pressure of the wheel brake.

In the apparatus adopting the above described reflux system, a normally opened liquid pressure feeding valve by the electromagnetic operation on the main flow passage between the reflux point and the branch point is provided as, for example, the above described pressure governing means, and also, a normally closed liquid pressure discharging valve by the electromagnetic operation is provided on the reflux passage between the branch point and the pump so as to effect the brake liquid pressure control at the antilocking time through three modes of pressure reduction, retention, pressure increase by the switching operation of the above described two electromagnetic valves.

In the antilocking apparatus of the above described reflux system, the operating liquid to be discharged from the wheel brake is returned onto the master cylinder side by the pump at the antilocking pressure reduction time, so that the problems of noises and so on in accordance with the vibrations of the brake pedal and the vibrations of the piping system by the pumping pulsation are caused.

In order to reduce the transferring of the pulsation of the above described pumping onto the master cylinder side, various methods are proposed. There are proposed, for example, a method (West Germany Patent Application No. 2643860) of providing a throttle between the pumping discharge opening and the return point, having a buffer chamber having the large area between the throttle and the pump discharge opening, and a method (Japanese Patent Publication Tokukohei No. 1-43663) of providing a check valve, between the return point and the master cylinder, with the side towards the return point from the master cylinder being in a forward direction, and also, a member slidably engaged with the check valve and a piston fixed to the member are provided, the volume of an accumulator portion for accommodating the operating liquid from the pump is increased by the movement of the above described member, further the piston under the pumping discharge pressure so as not to transfer it onto the master cylinder side.

But there are various problems in the above described transfer preventing method of the pump pulsation conventionally proposed. Namely, the above described method of West Germany patent, there are problems that the load of the pumping becomes larger due to increase in the pump discharge pressure on the side of the throttle as the whole amount of the pump discharge amount passes through the throttle, and the size becomes larger due to the provision of the buffer chamber of the large diameter so as to require the end plug and so on. Also, the method of Japanese Patent Publication Tokukohei 1 - 43663 has problems that the large accumulator portion is required, the size becomes larger, the cost becomes higher and so on, because the construction is extremely complicated, and all the pump discharge liquid is stored in amount in the normal antilocking condition so as not to return onto the master cylinder side under the normal antilocking condition.

A device having the features of the preamble of claim 1 is known from DE-A-3 844 126.

### SUMMARY OF THE INVENTION

Accordingly, the present invention has been developed with a view to substantially eliminating the above discussed drawbacks inherent in the prior art and has for its essential object to provide an improved braking circuit.

Another important object of the present invention is to provide an improved braking circuit of the type referred to above, wherein an apparatus which is adapted to effectively restrain the unpleasant pulsation to be transferred onto the master cylinder side by the equalization of the discharge pressure through the absorption of the discharge pressure which becomes periodically larger considering especially the characteristics of the pulsation of the pump is provided, and also, the apparatus is adapted to be prevented from becoming larger in size and from becoming higher in cost as the extremely simple construction of the apparatus.

According to the present invention, there is provided a braking circuit provided with an interlocking apparatus comprising a reflux passage branching at a branch point from a main flow passage connecting a master cylinder with a wheel brake, the reflex passage being operable to return the operating liquid to the main flow passage at a return point on the master cylinder side of the branch point, a pump provided on the reflux passage to return the operating liquid, a pressure governing means which is adapted to reduce the breaking pressure of the wheel brake by the discharging of the operating liquid from the wheel brake to the reflux passage, and also, to increase the braking pressure of the wheel brake by the feeding of the operating liquid into the wheel brake from the main flow passage, a liquid chamber interposed between the pump and the return point in the reflux passage and having a first port connected to the return point side, a second port connected onto the discharge side of the pump, a valve member which is slidably accommodated within the liquid chamber sprung so as to cut off the first port from the second port normally but to allow liquid to pass from the second port to the first port under the discharge pressure of the pump to be flowed into the liquid chamber, and a valve member accommodating chamber characterised in that said accommodating chamber accommodates a portion of the valve member when it moves to an open disposition, so as to increase the operating liquid accommodating volume of the liquid chamber in accordance with the amount of movement of the valve member, thus forming a liquid pressure absorbing means which is adapted to absorb the pump discharge liquid pressure by the increase in the operating liquid accommodating volume of the liquid chamber when the pump discharge liquid pressure is large.

In a preferred embodiment, the valve member accommodating chamber is a braking circuit described in accordance with the claim 1, wherein the valve member accommodating chamber is connected with one end of the liquid chamber, a valve opening/closing portion for opening and closing the valve seat is formed at one end of the valve member to be accommodated within the liquid chamber, and an accommodating portion to be slidably inserted into the valve member accommodating chamber is formed on the other end, and wherein, when the valve seat is opened by the pump discharge liquid pressure to move the valve member, the portion of the valve member inserted into the valve member accommodating chamber is increased so as to increase the operation liquid accommodating volume within the liquid chamber.

The valve member is moved against the spring force in accordance with the pressure force of the pump discharge liquid to be inflowed from the second portion at the pressure reduction of the antilocking so as to increase the operating liquid accommodating volume within the liquid chamber. The large discharge pressure is absorbed so as to equalize the discharge pressure to be returned onto the feedback point side from the second port, so that the unpleasant pump pulsation to be transferred to the brake pedal.through the master cylinder may be restrained.

### BRIEF DESCRIPTION OF THE DRAWINGS

These and other objects and features of the present invention will become apparent from the following description taken in conjunction with the preferred embodiment thereof with reference to the accompanying drawings, in which;
Fig. 1 is a whole construction view showing an embodiment of a braking circuit provided with an antilocking apparatus in accordance with the present invention;
Fig. 2 is a sectional view showing the operation of a pressure absorbing valve;
Fig. 3 is a chart showing the pump discharge pressure; and
Fig. 4 (A) through Fig. 4 (C) are sectional views showing the operation of the flow amount controlling valve.

### DETAILED DESCRIPTION OF THE INVENTION

Before the description of the present invention proceeds, it is to be noted that like parts are designated by like reference numerals throughout the accompanying drawings.

### Embodiment

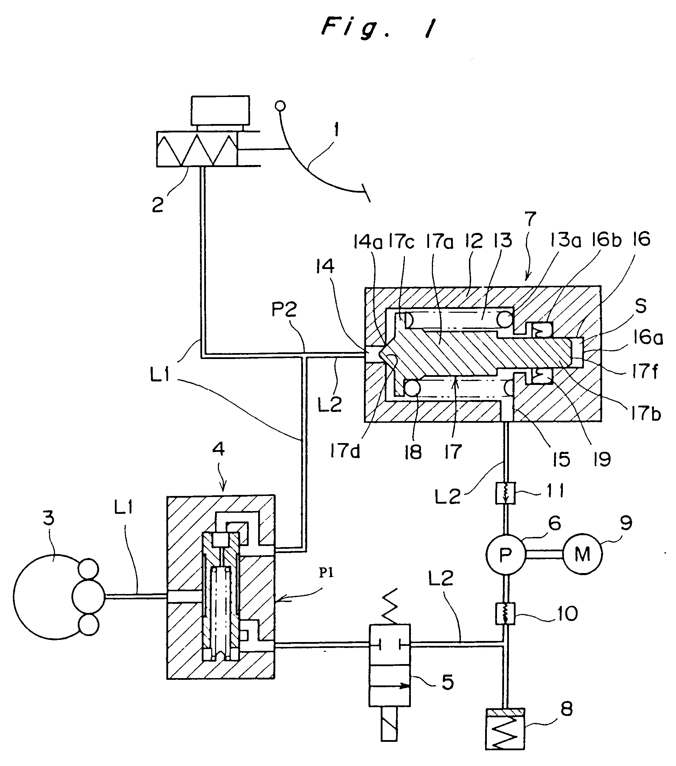

Referring now to the drawings, there is shown in Fig. 1, a braking circuit provided with an antilocking apparatus according to one preferred embodiment of the present invention, which includes a brake pedal 1, a master cylinder 2 for operating in accordance with a pedaling force of the brake pedal 1, a wheel brake 3, a main flow passage L1 for connecting the above described master cylinder 2 with the wheel brake 3, a reflux passage L2 which is branched at the branch point P1 from the main flow passage L1 so as to join the main flow passage L1 at the return point P2 of the upper steam side (namely, the master cylinder 2 side) above the branch point P1, a flow amount controlling valve 4 provided at a branch point P1 of the main flow passage L1, an electromagnetic valve 5 provided on the reflux passage L2, a pump for the operating liquid reflux use 6 provided with the electromagnetic valve 5 and the return point P2 in the reflux passage L2, a pressure absorbing valve 7 provided on the reflux passage L2 between the pump 6 and the return point P2.

The electromagnetic valve 5, which is normally closed, to be provided on the reflux passage L2 is adapted to automatically open by the electromagnetic operation at the antilocking pressure reduction time, to discharge the operating liquid from the wheel brake 3 into the reflux passage L2 through flow amount controlling valve 4 so as to pressure reduce the wheel brake 3. At the pressure reincreasing time of the braking pressure, the electromagnetic valve 5 is closed to cut off the discharging into the reflux passage L2, and also, the operating liquid is fed into the wheel brake 3 through the flow amount control valve 4 from the main flow passage L1 so as to pressure increase the wheel brake 3, with the pressure governing means of the operating liquid being composed of the flow amount controlling valve 4 and the electromagnetic valve 5.

On the reflux passage L2, a reservoir 8 is provided 2 on the lower stream of the above described electromagnetic valve 5, the above described pump 6 to be driven by the motor 9 is provided on the lower stream of the reservoir 8. The check valves 10, 11 are respectively on the pump 6, the reservoir 8 and the pump 6, the pressure absorbing valve 7, so that the operating liquid discharged into the reflux passage L2 is refluxed only in the direction of the return point P2 from the branch point P1.

The above described pressure absorbing valve 7 has a liquid chamber 13 provided within the housing 12, a first port 14 connecting onto the side of the return point P2 of the reflux passage L2 is communicated with the left end (in the drawing) of the liquid chamber 13, and a second port 15 connecting with the reflux passage L2 on the pump discharging side is formed on the lower portion on the right end side opposite to the liquid chamber 13. Within the housing 12, a valve member accommodating chamber 16 of the small diameter is formed in communication with the center portion of the right end face of the liquid chamber 13.

A valve member 17 is accommodated from the above described liquid chamber 13 to the valve member accommodating chamber 16, and is approximately cylindrical shape having two stages of large, small diameters. The larger diameter portion 17a is accommodated in the large space drilled in the interior portion of the liquid chamber 13, while the tip end side of the accommodating portion 17b composed of the smaller diameter portion is slidably inserted into the valve member accommodating chamber 16. A flange portion 17c is projected from the tip end outer periphery of the larger diameter portion 17a of the valve member 17 with a valve opening, closing portion 17d projected into a conical shape is formed in the central portion of the flange portion 17c. A spring 18 is contracted between the above described flange portion 17c and the other end face 13a (the side face on the communication side with respect to the valve member accommodating chamber 16) so as to urge the valve opening, closing portion 17d to come into contact against the valve seat portion 14a of the first port 14 for normally closing the first port 14 to cut off the flow passage with respect to the second port 15. A space S is set to be caused between the tip end 17f of the valve member accommodating portion 17b inserted into the valve member accommodating chamber 16 and the tip end wall face 16a of the valve member accommodating chamber 16 with the valve member 17 being urged by the spring 18. It is to be noted that the tip end of the valve member accommodating chamber 16 may be kept open. A seal mounting portion 16b is formed in the axial intermediate portion of the above described valve member accommodating chamber 16, and the operating liquid is adapted not to be leaked onto the space S side of the valve member accommodating chamber 16 into the liquid chamber 13 with a seal 19 being provided between the inner peripheral face of the seal mounting portion 16b and the outer peripheral face of the valve member small diameter portion 17b.

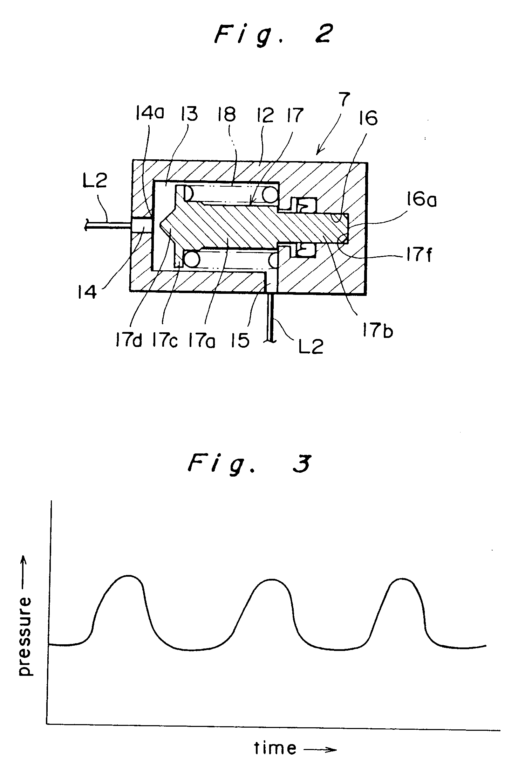

When the pump discharge liquid is flowed into from the second port 15 in the above described pressure absorbing valve 7, it enters into the liquid chamber 13 to act upon the flange portion 17c of the valve member 17 for moving the valve member 17 against the spring 18 in the right direction in the drawing so as to open the valve seat 14a of the first port 14. The valve member accommodating portion 17b is inserted further deeply into the interior of the valve member accommodating chamber 16, as shown in Fig. 2, by the movement of the valve member 17, because the space S is provided within the valve member accommodating chamber 16. Therefore, the volume of the valve member 17 located within the liquid chamber 13 is decreased, and the filling volume of the operating liquid within the liquid chamber 13 is to be correspondingly increased.

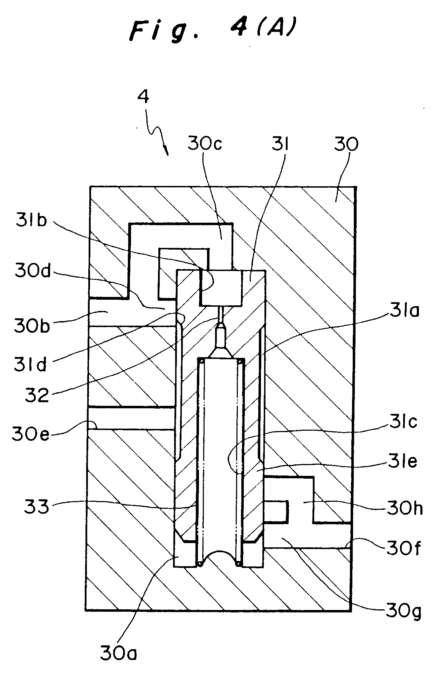

The operating liquid to be discharged out of the pump 6 becomes periodically larger in pressure as shown in Fig. 3, the valve member 17 of the above described pressure absorbing valve 7 is moved in accordance with the pressure to increase the filling volume of the operating liquid, so that the pressure is to be absorbed when the larger pressure has been applied. Thus, the operating liquid having the pressure fluctuation shown in Fig. 3 is not discharged from the first port 14 in a condition as it is, and the large pressure is moderated, namely, the pulsating is moderated, so that the pressure becomes approximately uniform and is discharged out of the first port 14.

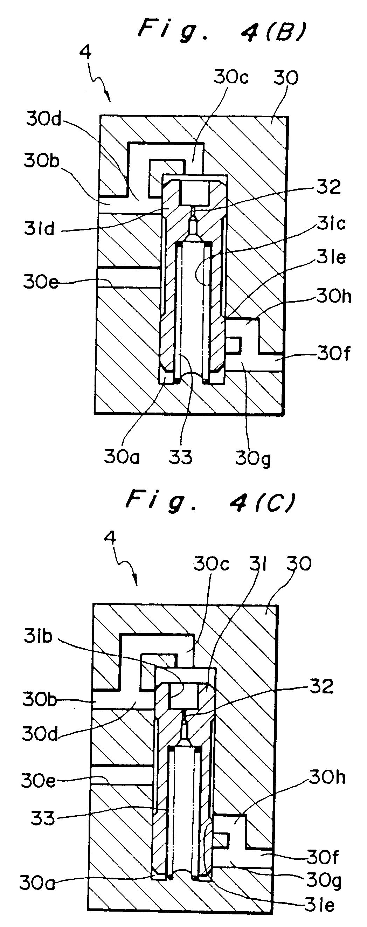

The flow amount controlling valve 4 composing the above described adjusting means engages a spool 31 slidably in the axial direction into the hole 30a drilled in the housing 30 as shown in detail in Fig. 4 (A). A entrance 30b connected with the second port 8b of the above described pressure absorbing valve 7 through the main flow passage L1 on the return point P2 side, flow passages 30c, 30d branched from the entrance 30b and communicated with the hole 30a, a first exit 30e connected with the main flow passage L1 on the side of the wheel brake 3, a second exit 30f connected with the reflux passage L2, flow passages 30g, 30h branched from the second exit 30f and connected with the hole 30a are provided on the side face of the housing 30.

The above described spool 31 has an outer peripheral groove portion 31a provided on the side face, and also, has holes respectively opened in both the end faces through the orifice 32 along the axial core portion so as to constitute a pressure adding chamber 31b, a pressure reducing chamber 31c. A spring 33 is contracted in, inserted into the above described pressure reducing chamber 31c to upwardly (in the drawing) urge the spool 31.

As the flow amount controlling valve 4 is constructed as described hereinabove, the above described spool 33 is provided in a position shown in Fig. 4 (A) at the normal brake pressure increasing time. A large flow passage for flowing the operating liquid from the master cylinder 2 side onto the side of the wheel brake 3 through the entrance 30b, the outer peripheral groove portion 31a, the first exit 30e is formed.

The operation of the above described embodiment will be described hereinafter.

At the normal braking operation time, namely, at the non-antilocking time, the operating liquid is guided into the flow amount controlling valve 4 from the master cylinder 2 side, and is introduced into the wheel brake 3 through the above described large flow passage with the flow amount controlling valve 4. Therefore, the operating liquid corresponding to the pedaling force of the brake pedal 1 is fed to the wheel brake 3 so as to apply the pressure upon the brake.

At the antilocking pressure reducing time, the electromagnetic valve 5 is opened, the operating liquid within the pressure reducing chamber 31c of the flow amount controlling valve 4 is discharged onto the side of the reflux passage L2 from the second exit 30f through the flow passage 30g and flows into the reservoir 8 through the electromagnetic valve 5. In the flow amount controlling valve 4, the different pressure is caused at both the ends of the spool 31 with the orifice 32 as a boundary by the outflowing of the operating liquid from the pressure reducing chamber 31c, and the spool 31 is moved downwards in the drawing as shown in Fig 4 (B). Therefore, the communication between the outer peripheral groove portion 31a and the entrance 30b is cut off by the edge 31d of the outer peripheral groove portion 31a so as to close the large flow passage. As shown in Fig. 4 (C), the spool 31 moves downwards in the drawing so as to form a pressure reducing passage leading to the first exit 30e → the outer peripheral groove portion 31a → the flow passage 30h → the second exit 30f. In the pressure reducing flow passage, the flow amount is controlled in accordance with the open condition of the flow passage 30h by the edge 31e so as to discharge the operating liquid from the wheel brake 3 into the reflux passage L2. The operating liquid discharged into the reflux passage L2 is stored in the reservoir 8, and is discharged onto the side of the pressure absorbing valve 7 through the pump 6 to be driven by the motor 9. As described hereinabove, in the pressure absorbing valve 7, the operating liquid flowed into the liquid chamber 13 from the second port 15 moves so that the accommodating portion 17b may insert the valve member 17 deep into the valve member accommodating chamber 16 in accordance with the pressure so as to increase the operating liquid filling capacity of the liquid chamber 13 in accordance with the movement amount, so that the pressure fluctuation is absorbed to reflux it to the return point P2 from the first port 14 with approximately equal pressure. It is refluxed onto the master cylinder 2 side with the pulsation being restrained through the main flow passage L1 from the return point P2.

At the pressure reincreasing time after the antilocking operation, the electromagnetic valve 5 become non-fed so as to stop the outflow of the operating liquid from the second exit 30f of the flow amount controlling valve 4. As shown in Fig. 4 (C), under the condition, the small flow passage leading to the entrance 30b → the flow passage 30c → the pressure increasing chamber 31b → the orifice 32 → the pressure reducing chamber 31c → the flow passage 30g → the flow passage 30h → the outer peripheral groove 31a → the first exit 30e in the flow amount controlling valve 4. The operating fluid from the master cylinder 2 is fed to the wheel brake 3 through the small flow passage of the flow amount controlling valve 4 through the main flow passage L1 so as to slowly raise the pressure of the brake 3. When the different pressure between the above described flow entrance 30b and the first exit 30e becomes smaller, the spool 31 of the above described flow amount controlling valve 4 is restored into a position shown in Fig. 4 (A) by the urging force of the spring 33 to retain the large flow passage again.

At the pressure reincreasing time, one portion of the operating liquid to be discharged from the pump 6 is fed to the wheel brake 3 through the flow amount controlling valve 4 from the return point P2.

As is clear from the foregoing description, in the braking circuit provided with an antilocking apparatus in accordance with the present invention, the operating liquid to be discharged from the pump at the antilocking operation is absorbed large in volume so as to ease the pressure variation, so that it is refluxed onto the master cylinder side so as to restrain the pulsation to be operated upon the brake pedal. Also, as the present utility model is of simple construction only with provision of the pressure absorbing valve composed of extremely simple construction, the pulsation of the pump discharging pressure is restrained to improve the pedal feeling without the space being made larger, the size being made larger, and the cost being made higher.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

## Claims

1. A braking circuit provided with an antilocking apparatus comprising a reflux passage (L2) branching at a branch point (P1) from a main flow passage (L1) connecting a master cylinder (2) with a wheel brake (3), the reflux passage (L2) being operable to return the operating liquid to the main flow passage at a return point (P2) on the master cylinder side of the branch point (P1), a pump (6) provided on the reflux passage to return the operating liquid, a pressure governing means (4, 5) which is adapted to reduce the braking pressure of the wheel brake by the discharging of the operating liquid from the wheel brake to the reflux passage, and also, to increase the braking pressure of the wheel brake by the feeding of the operating liquid into the wheel brake from the main flow passage, a liquid chamber (13) interposed between the pump (6) and the return point (P2) in the reflux passage and having a first port (14) connected to the return point side, a second port (15) connected onto the discharge side of the pump (6), a valve member (17) which is slidably accommodated within the liquid chamber (13) and sprung so as to cut off the first port (14) from the second port (15) normally, but to allow liquid to pass from the second port to the first port under the discharge pressure of the pump (6) to flow into the liquid chamber, and a valve member accommodating chamber (16) characterised in that said accommodating chamber (16) accommodates a portion of the valve member (17), so as to increase the operating liquid accommodating volume of the liquid chamber (13) in accordance with the amount of movement of the valve member (17), thus forming a liquid pressure absorbing means which is adapted to absorb the pump discharge liquid pressure by the increase in the operating liquid accommodating volume of the liquid chamber (13) when the pump discharge liquid pressure is large.

2. A braking circuit as in claim 1, wherein the valve member accommodating chamber (16) is connected with one end of the liquid chamber, a valve opening/closing portion for opening and closing the valve seat is formed at one end of the valve member (17) to be accommodated within the liquid chamber (13), and an accommodating portion (17b) to be slidably inserted into the valve member accommodating chamber (16) is formed on the other end, and wherein, when the valve seat is opened by the pump discharge liquid pressure to move the valve member (17), the portion of the valve member inserted into the valve member accommodating chamber is increased so as to increase the operation liquid accommodating volume within the liquid chamber (13).

## Patentansprüche

1. Bremskreis, der mit einem Antiblockiergerät versehen ist, das aufweist:
- einen Rückstromkanal (L2), der an einem Verzweigungspunkte (P1) von einem Hauptstromkanal (L1) abzweigt, welcher einen Hauptbremszylinder (2) mit einer Radbremse (3) verbindet, wobei der Rückstromkanal (L2) in der Lage ist, die Betriebsflüssigkeit an einem Umkehrpunkt (P2) an der Hauptbremszylinderseite des Abzweigungspunktes (P1) in den Hauptstromkanal zurückzuführen;
- eine Pumpe (6), die im Rückstromkanal angeordnet ist, um die Betriebsflüssigkeit zurückzuführen;
- eine Druckreglereinrichtung (4, 5), die in der Lage ist, den Bremsdruck der Radbremse durch Entleeren der Betriebsflüssigkeit aus der Radbremse in den Rückstromkanal zu verringern, und ebenso den Bremsdruck der Radbremse durch Einspeisen der Betriebsflüssigkeit aus dem Hauptstromkanal in die Radbremse zu erhöhen;
- eine Flüssigkeitskammer (13), die im Rückstromkanal zwischen die Pumpe (6) und den Umkehrpunkt (P2) eingefügt ist und die aufweist: eine erste Durchgangsöffnung (14), die an die Umkehrpunktseite angeschlossen ist; eine zweite Durchgangsöffnung (15), die an die Entleerungsseite der Pumpe (6) angeschlossen ist, ein Ventil (17), das gleitend in der Flüssigkeitskammer (13) gelagert und gefedert ist, sodaß sie normalerweise die erste Durchgangsöffnung (14) von der zweiten Durchgangsöffnung (15) abschneidet, es aber der Flüssigkeit ermöglicht, unter dem Entleerungsdruck der Pumpe (6) von der zweiten Durchgangsöffnung zur ersten Durchgangsöffnung und in die Flüssigkeitskammer zu fließen; und eine Ventilaufnahmekammer (16),
dadurch **gekennzeichnet**, daß die Aufnahmekammer (16) einen Abschnitt des Ventils (17) aufnimmt, derart, daß das Betriebsflüssigkeits-Aufnahmevolumen der Flüssigkeit (13) gemäß der Größe der Bewegung des Ventils (17) vergrößert wird, wodurch eine Einrichtung zum Absorbieren des Flüssigkeitsdruckes gebildet wird, die so beschaffen ist, daß sie den Druck der von der Pumpe entleerten Flüssigkeit durch die Vergrößerung des die Betriebsflüssigkeit aufnehmenden Volumens der Flüssigkeitskammer (13) absorbiert, wenn der Druck der von der Pumpe entleerten Flüssigkeit groß ist.

2. Bremskreis nach Anspruch 1, bei dem die Ventilaufnahmekammer (16) mit einem Ende an die Flüssigkeitskammer angeschlossen ist; ein Ventilöffnungs-/schließabschnitt zum Öffnen und Schließen des Ventilsitzes an einem Ende des in der Flüssigkeitskammer (13) unterzubringenden Ventils (17) gebildet ist; und bei dem ein Halterungsabschnitt (17b), der gleitend in die Ventilaufnahmekammer (16) eingefügt ist, am anderen Ende gebildet ist; und wobei im Falle, daß der Ventilsitz durch den Druck der von der Pumpe abgepumpten Flüssigkeit geöffnet wird, um das Ventil (17) zu bewegen, der Abschnitt des Ventils, der in die Ventilaufnahmekammer eingefügt ist, vergrößert wird, so daß das die Betriebsflüssigkeit aufnehmende Volumen in der Flüssigkeitskammer (13) vergrößert wird.

## Revendications

1. Circuit de freinage muni d'un dispositif anti-blocage comprenant une conduite de reflux (L2) se branchant à un point de branchement (P1) d'une conduite d'écoulement principale (L1) raccordant un maître cylindre (2) à un frein de roue (3), la conduite de reflux (L2) pouvant être mise en oeuvre pour retourner le liquide fonctionnel à la conduite d'écoulement principale à un point de retour (P2) sur le côté maître cylindre du point de branchement (P1), une pompe (6) prévue sur la conduite de reflux pour renvoyer le liquide fonctionnel, un moyen de gouverne de pression (4, 5) qui est prévu pour diminuer la pression de freinage du frein de roue par le refoulement du liquide fonctionnel à partir du frein de roue à la conduite de reflux et aussi pour augmenter la pression de freinage du frein de roue par l'introduction du liquide fonctionnel dans le frein de roue à partir de la conduite d'écoulement principale, une chambre de liquide (13) est placée entre la pompe (6) et le point de retour (P2) dans la conduite de reflux et comportant un premier orifice (14) raccordé au côté point de retour, un second orifice (15) raccordé sur le côté de refoulement de la pompe (6), un élément de vanne (17) qui est reçu de manière coulissante à l'intérieur de la chambre de liquide (13) et sollicité par ressort de façon à normalement couper le premier orifice (14) avec le second orifice (15) mais à permettre au liquide de passer du second orifice au premier orifice sous la pression de refoulement de la pompe (6) afin de circuler dans la chambre de liquide et une chambre contenant l'élément de vanne (16) caractérisé en ce que la chambre contenant l'élément de vanne (16) contient une partie de l'élément de vanne (17) de façon à accroître le volume de contenance du liquide fonctionnel de la chambre de liquide (13) en conformité avec la valeur du déplacement de l'élément de vanne (17), formant ainsi un moyen d'absorption de la pression du liquide qui est prévu pour absorber la pression du liquide de refoulement de la pompe par l'augmentation du volume de contenance du liquide fonctionnel de la chambre de liquide (13) lorsque la pression du liquide de refoulement de la pompe est importante.

2. Circuit de freinage selon la revendication 1, dans lequel la chambre contenant l'élément de vanne (16) est raccordée à une extrémité de la chambre de liquide, une partie d'ouverture/fermeture de vanne pour ouvrir et fermer le siège de vanne est formée à une extrémité de l'élément de vanne (17) qui doit être reçu à l'intérieur de la chambre de liquide (13),et une partie de réception (17b) qui doit être insérée de manière coulissante dans la chambre de réception de l'élément de vanne (16) est formée sur l'autre extrémité, et dans lequel, lorsque le siège de vanne est ouvert par la pression du liquide de refoulement de la pompe pour déplacer l'élément de vanne (17), la partie de l'élément de vanne insérée dans la chambre de réception de l'élément de vanne est accrue de façon à accroître le volume de réception de liquide fonctionnel à l'intérieur de la chambre de liquide (13).
